# EUROPEAN PATENT APPLICATION

(11) **EP 4 715 240 A1**
(43) Date of publication of application: **25.03.2026**
(21) Application number: 24810841.7
(22) Date of filing: 26.04.2024
(51) Int. Cl.: F16J 15/06, F16J 15/10

(54) **SEALING STRUCTURE**

(30) Priority: 19.05.2023 JP 2023083137
(71) Applicant: NOK Corporation, Minato-ku, Tokyo 105-8585 (JP)
(72) Inventor: MAEKAWA, Hirokazu, Aso-shi, Kumamoto 869-2231 (JP)
(74) Representative: Global IP Europe Patentanwaltskanzlei
(86) International application number: PCT/JP2024/016407
(87) International publication number: WO 2024/241833

(57) **Abstract**

Provided is a sealing structure capable of preventing a portion of a gasket from being lifted up from a fitting groove when the gasket is fitted into the fitting groove. A gasket 300 includes an annular gasket main body 310 to be fitted into a fitting groove 210 and a plurality of protrusions 320 provided on an inner circumferential surface of the gasket main body 310, the protrusions 320 being provided spaced apart from each other in a circumferential direction. In a state where the gasket 300 is fitted in the fitting groove 210 before a first member and a second member are fixed together, the protrusions 320 are in contact with one of sidewalls of the fitting groove 210, and the gasket main body 310 has a meandering portion 312 which is not in contact with either of the sidewalls of the fitting groove 210.

## Description

### [Technical Field]

The present invention relates to a sealing structure.

### [Background Art]

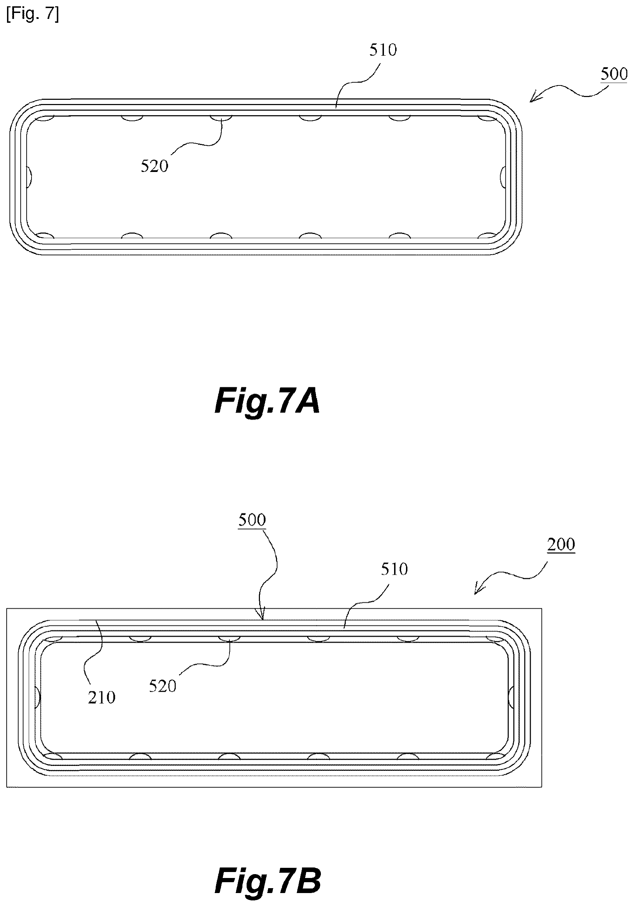

In a case for an engine or a transmission, a sealing structure having a gasket is provided so as to prevent oil or the like from leaking to the outside of the case. Referring to Fig. 7, a description will be given of a sealing structure of a case according to a related art. Fig. 7A is a plan view of a gasket according to the related art, and Fig. 7B is a bottom view illustrating a state where the gasket is fitted to a member constituting the case.

In general, a case is configured to include a case main body having an opening and a lid for closing the opening of the case main body. When a sealing structure is to be provided, a gasket is provided to seal a gap between respective end surfaces of the case main body and the lid.

In an example illustrated in Fig. 7, a gasket 500 is fitted into an annular fitting groove 210 provided in a lid 200, and the lid 200 is fixed to a case main body not shown to form a sealing structure. In other words, when the case main body and the lid 200 are fixed together, the gasket 500 fitted in the fitting groove 210 is compressed by the case main body and the lid 200 to seal a gap between respective end surfaces of the case main body and the lid 200.

There is a situation where, transportation or the like is performed in a state where the gasket 500 is fitted in the lid 200, and, after various components or devices are installed in the case main body, the lid 200 is fixed to the case main body. In such a situation, the gasket 500 is to be kept from falling out of the fitting groove 210 during the transportation. In view of this, the gasket 500 is provided with a plurality of protrusions 520 for fall prevention in an inner circumferential surface of an annular gasket main body 510 to be fitted into the fitting groove 210, the plurality of protrusions 520 being provided spaced apart from each other in a circumferential direction. When the gasket 500 thus configured is fitted into the fitting groove 210, an outer circumferential surface of the gasket 500 comes into contact with an outer circumferential sidewall of the fitting groove 210, and the plurality of protrusions 520 come into contact with an inner circumferential sidewall of the fitting groove 210. As a result, the gasket 500 is brought into a state in which it is compressed in a width direction and prevented from falling out of the fitting groove 210.

When the gasket 500 thus configured is being fitted into the fitting groove 210, a portion thereof may be lifted up from the groove, leading to degraded workability. It has been found that, particularly in a case where a groove depth of the fitting groove 210 is shallower due to various restrictions, the lifting up is likely to occur in a linear portion of the gasket main body 510 which is located between the adjacent protrusions 520. Possible causes thereof include the following. That is, when the gasket 500 is being fitted into the fitting groove 210, the gasket 500 is compressed in the width direction at the portions with the protrusions 520. Consequently, a force to compress in a linear direction the linear portion of the gasket main body 510 which is located between the adjacent protrusions 520 is exerted thereon. As a result, a force to deform the linear portion is exerted thereon such that the linear portion is lifted up from the fitting groove 210 and therefore, when this force exceeds a frictional force between the linear portion and the sidewall of the fitting groove 210, the portion is lifted up. It is considered that, particularly as the groove depth of the fitting groove 210 is shallower, a contact area between the linear portion and the sidewall of the fitting groove 210 is smaller, and the frictional force is also smaller, and therefore the lifting up is more likely to occur.

### [Citation List]

### [Patent Literature]

[PTL 1]
WO 2007/7611

### [Summary of Invention]

### [Technical Problem]

The present invention provides a sealing structure capable of preventing a portion of a gasket from being lifted up from a fitting groove when the gasket is fitted into the fitting groove.

### [Solution to Problem]

To solve the problem described above, the present invention has adopted the following means.

That is, one aspect of the present invention is a sealing structure including:
a first member;
a second member to be fixed to the first member; and
a gasket to be fitted into an annular fitting groove provided in at least one of the first member and the second member to seal a gap between respective end surfaces of the first member and the second member, the gasket including:
   an annular gasket main body to be fitted into the fitting groove; and
   a plurality of protrusions provided on an inner circumferential surface or an outer circumferential surface of the gasket main body, the protrusions being provided spaced apart from each other in a circumferential direction,
wherein, in a state where the gasket is fitted in the fitting groove before the first member and the second member are fixed together, the protrusions are in contact with one of sidewalls of the fitting groove, and the gasket main body has a meandering portion which is not in contact with either of the sidewalls of the fitting groove.

The gasket main body according to the present invention is configured to have the meandering portion which is not in contact with either of the sidewalls of the fitting groove. Even when a compressive force is exerted on a portion of the gasket main body which is located between the adjacent protrusions by the gasket being fitted in the fitting groove, the force is absorbed by the meandering portion, and a force to deform the gasket such that the gasket is lifted up from the fitting groove is suppressed.

In the state where the gasket is fitted in the fitting groove before the first member and the second member are fixed together, a portion of the gasket main body other than the meandering portion may be configured to be in contact with the one of the sidewalls of the fitting groove opposite to the sidewall with which the protrusions are in contact.

This can more reliably prevent the gasket from falling out of the fitting groove.

Each of the protrusions may be provided with a hollow.

This suppresses a repulsive force when the protrusions are compressed, and can therefore prevent the gasket from lifting up more reliably.

### [Advantageous Effects of Invention]

As described above, according to the present invention, it is possible to prevent a portion of a gasket from being lifted up from a fitting groove when the gasket is fitted into the fitting groove.

### [Brief Description of Drawings]

[Fig. 1]

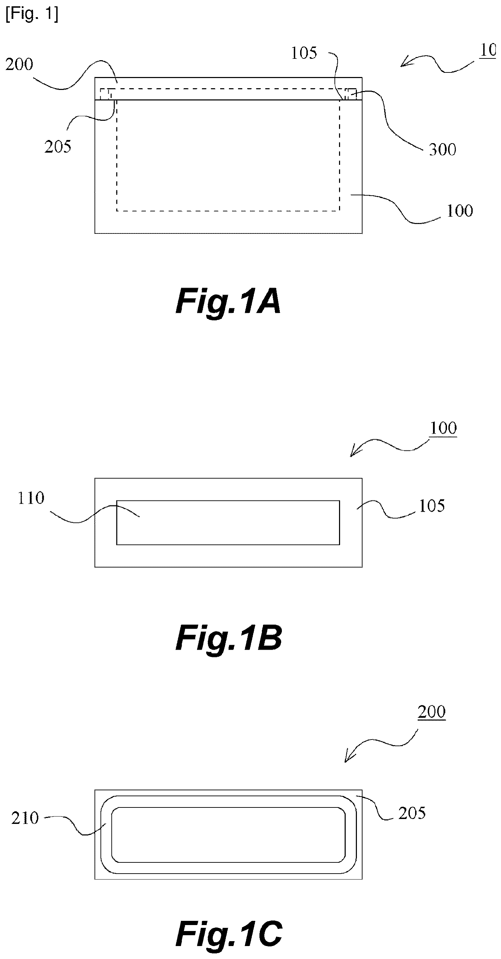

   Fig. 1 is an illustrative view of a case having a sealing structure according to the first embodiment of the present invention.
[Fig. 2]

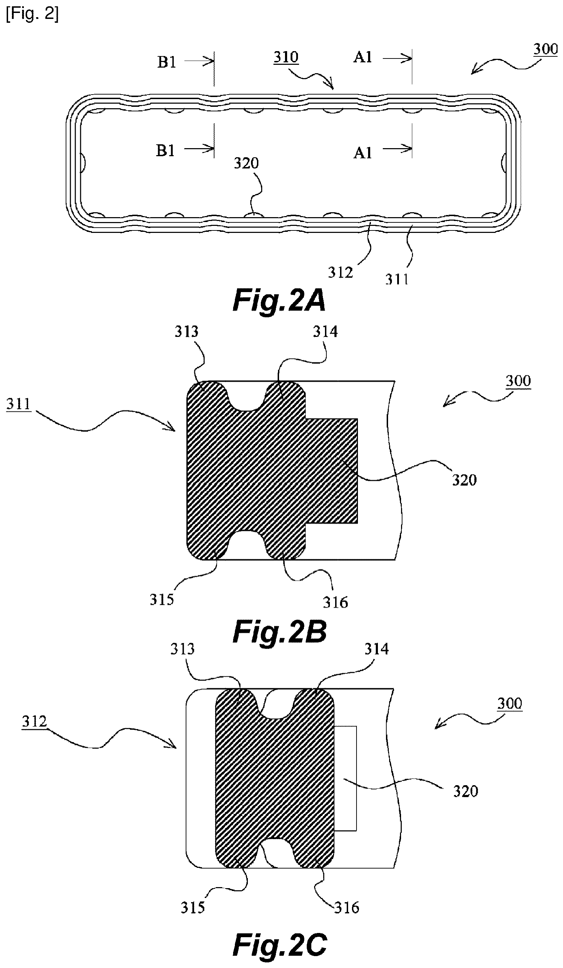

   Fig. 2 is a schematic view of a gasket according to the first embodiment of the present invention.
[Fig. 3]

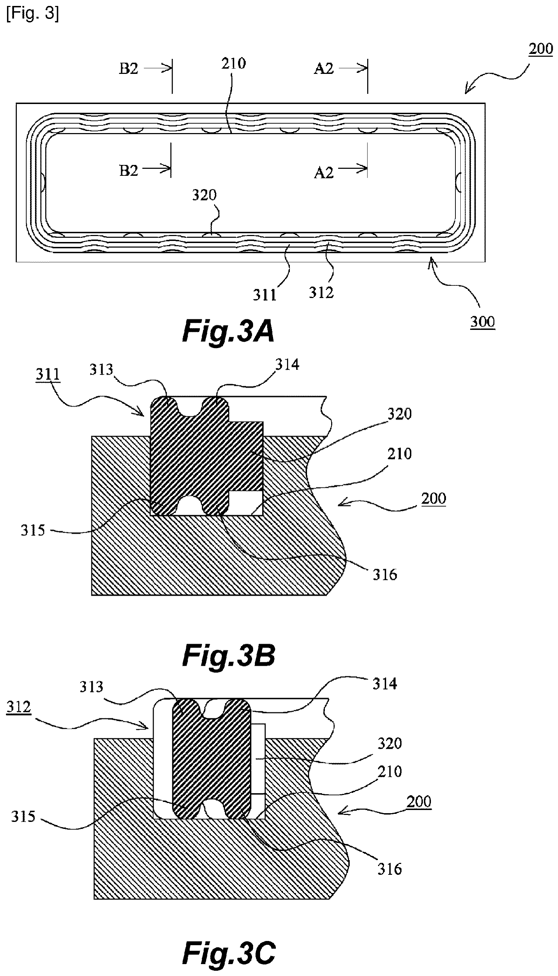

   Fig. 3 is an illustrative view of the sealing structure according to the first embodiment of the present invention.
[Fig. 4]

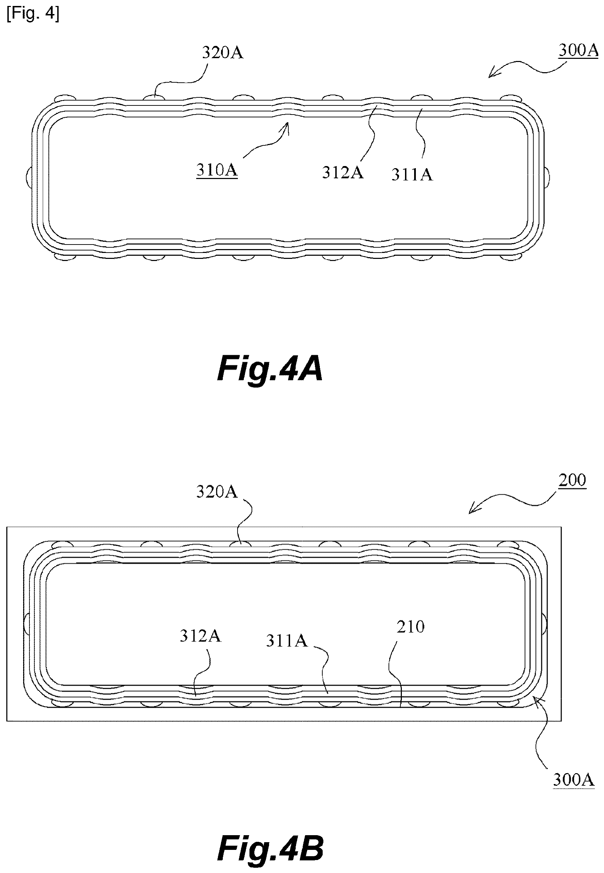

   Fig. 4 is an illustrative view of a sealing structure according to the second embodiment of the present invention.
[Fig. 5]

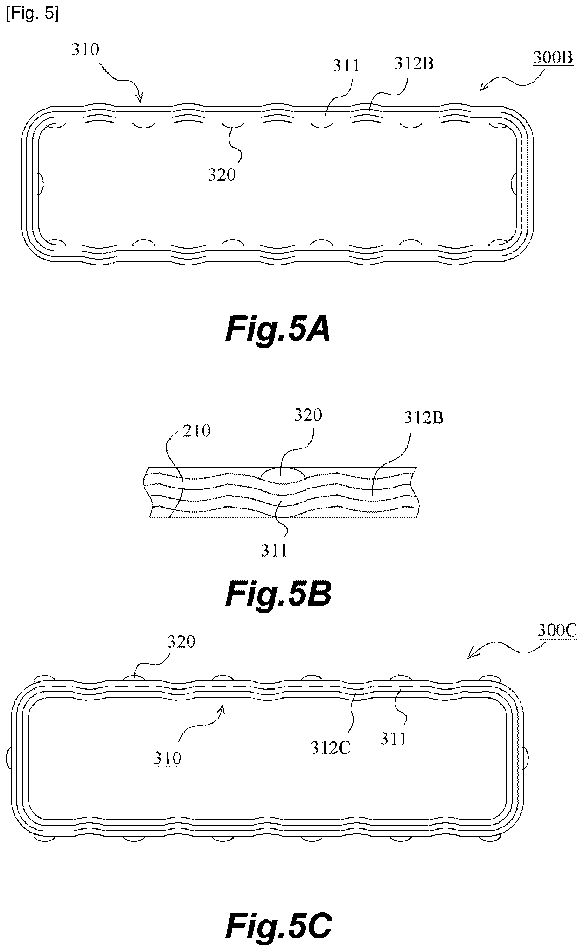

   Fig. 5 is a diagram illustrating modifications of the gasket.
[Fig. 6]

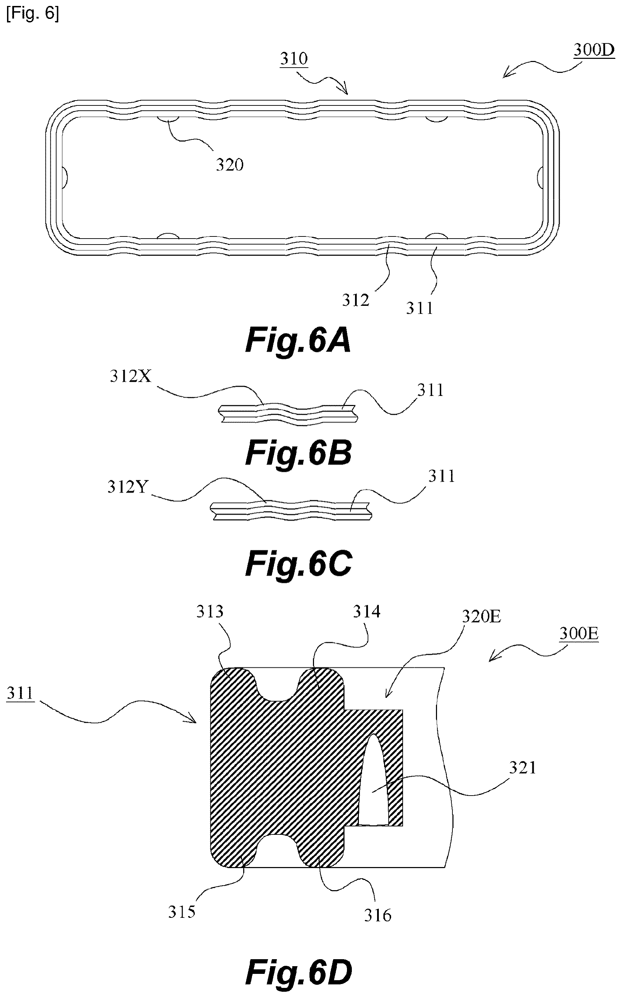

   Fig. 6 is a diagram illustrating modifications of the gasket.
[Fig. 7]
   Fig. 7 is an illustrative view of a sealing structure according to a related art.

### [Description of Embodiments]

Referring to the drawings, the following will illustratively describe modes for carrying out this invention in detail on the basis of embodiments. It should be noted that, unless particularly specified otherwise, the dimensions, materials, shapes, a relative arrangement, and the like of components described in the embodiments are not intended to limit the scope of this invention only thereto.

### (First Embodiment)

Referring to Fig. 1 to Fig. 3, a description will be given of a sealing structure according to the first embodiment of the present invention. Fig. 1 is an illustrative view of a case having the sealing structure according to the first embodiment of the present invention. Fig. 1A is an exterior view of the case, Fig. 1B is a plan view of a case main body, and Fig. 1C is a bottom view of a lid. Note that, in Fig. 1A, a dotted line indicates a part seen through. Fig. 2 is a schematic view of a gasket according to the first embodiment of the present invention. Fig. 2A is a plan view of the gasket, Fig. 2B is a cross-sectional view along A1-A1 line in Fig. 2A, and Fig. 2C is a cross-sectional view along B1-B1 line in Fig. 2A. Fig. 3 is an illustrative view of the sealing structure according to the first embodiment of the present invention. Fig. 3A is a bottom view illustrating a state where the gasket is fitted in the lid, Fig. 3B is a cross-sectional view along A2-A2 line in Fig. 3A, and Fig. 3C is a cross-sectional view along B2-B2 line in Fig. 3A.

### <Sealing Structure>

Referring to Fig. 1, an outline of the sealing structure will be described. A case 10 illustrated in Fig. 1 includes a case main body 100 serving as a first member and a lid 200 serving as a second member. Note that the case 10 according to the present embodiment is used appropriately as a case for an engine or a transmission. However, the case described below is not limited to such applications, and can appropriately be used as a case for various applications. Note that the sealing structure of the present invention is not limited to the sealing structure included in the case, and is applicable to various sealing structures that require sealing between respective end surfaces of two members.

The case main body 100 is provided with an opening 110, and various components and devices may be brought thereinto through the opening 110. The opening 110 is closed by fixing the lid 200 to the case main body 100. As a fixing structure for the case main body 100 and the lid 200, a structure using a fixture such as a bolt can be used as well as various known techniques.

A gasket 300 is provided to seal a gap between respective end surfaces of the case main body 100 and the lid 200 to form the sealing structure including these members. The gasket 300 is formed of an elastomer material such as rubber. In the present embodiment, the gasket 300 is fitted into an annular fitting groove 210 provided in the lid 200 to seal the gap between the respective end surfaces of the case main body 100 and the lid 200. Specifically, the gap between the respective end surfaces of the case main body 100 and the lid 200 is sealed by the gasket 300 being brought into a state compressed by an end surface 105 of the case main body 100 and a groove bottom surface of the annular fitting groove 210 provided in the end surface of the lid 200. Note that the fitting groove for fitting the gasket may be provided in the case main body, or a configuration in which the fitting groove is provided in each of the case main body and the lid can also be used.

### <Gasket>

Referring particularly to Fig. 2, a description will be given of a configuration of the gasket 300. The gasket 300 includes an annular gasket main body 310 to be fitted into the fitting groove 210 and a plurality of protrusions 320 provided on an inner circumferential surface of the gasket main body 310, the protrusions 320 being provided spaced apart from each other in a circumferential direction. The gasket main body 310 includes a portion having a similarity shape to the fitting groove 210 in a plan view (hereinafter referred to as a "similarity shape portion 311" for the sake of convenience) and a meandering portion 312 along the fitting groove 210. The meandering portion 312 has a meandering shape that protrudes in the same direction as a direction in which the protrusions 320 protrude (direction from an outer circumferential surface toward the inner circumferential surface in the present embodiment).

In the present embodiment, a pair of annular seal protrusions 313 and 314 are provided on one of front and back surfaces of the gasket main body 310, and a pair of annular seal protrusions 315 and 316 are provided on another surface. In the present embodiment, the gasket 300 has a symmetrical shape with respect to a center plane of the gasket 300 in a front-to-back direction thereof. Therefore, when the gasket 300 is being fitted into the fitting groove 210, there is no need to care about a direction thereof. Note that the present invention may be configured such that each of the front and back surfaces of the gasket main body has no seal protrusion, such that each of the front and back surfaces of the gasket main body has one annular seal protrusion, or such that each of the front and back surfaces of the gasket main body has three or more annular seal protrusions. Note that the present invention may be configured such that the gasket has an asymmetrical shape with respect to the center plane of the gasket in the front-to-back direction thereof. In this case, the present invention may be configured such that the surfaces of the gasket main body have different numbers of annular seal protrusions respectively. For example, a configuration may be adopted in which one annular seal protrusion is provided on one of the front and back surfaces of the gasket main body, and a pair of annular seal protrusions are provided on another surface. Another configuration may be adopted in which no annular seal protrusion is provided on one surface, and one or a plurality of annular seal protrusions are provided on another surface.

### <Gasket Fitted in Fitting Groove>

Referring particularly to Fig. 3, a description will be given of a relationship between the gasket 300 and the fitting groove 210 in a state where the gasket 300 is fitted in the fitting groove 210 before the case main body 100 and the lid 200 are fixed together. In this state, the plurality of protrusions 320 are configured to be in contact with one of the sidewalls of the fitting groove 210 (which is the inner circumferential sidewall in the present embodiment). This can prevent the gasket 300 from falling out of the fitting groove 210. In other words, the plurality of protrusions 320 function as protrusions for fall prevention. In the state described above, a portion of the gasket main body 310 other than the meandering portion 312 (i.e., the similarity shape portion 311) is configured to be in contact with another sidewall of the fitting groove 210 opposite to the sidewall with which the protrusions 320 are in contact (which is the outer circumferential sidewall in the present embodiment). This can more reliably prevent the gasket 300 from falling out of the fitting groove 210.

In the present embodiment, in the state described above, the meandering portion 312 is configured so as not to be in contact with either of the sidewalls of the fitting groove 210 (see Figs. 3A and 3C). Note that, in the state where the case main body 100 and the lid 200 are fixed together, the gasket 300 is deformed by being compressed by them. The meandering portion 312 may be configured such that, in this state, a part or the whole of both side surfaces of the meandering portion 312 is in contact with both sidewalls of the fitting groove 210.

### <Advantages of Sealing Structure According to Present Embodiment>

In the sealing structure according to the present embodiment, the gasket main body 310 has the meandering portion 312 that is not in contact with both sidewalls of the fitting groove 210. As a result, even when a force to compress a portion of the gasket main body 310 which is located between the adjacent protrusions 320 is exerted by fitting the gasket 300 into the fitting groove 210, the force is absorbed by the meandering portion 312. Specifically, since there are gaps between the meandering portion 312 and the sidewalls of the fitting groove 210, even when the force as described above is exerted, the meandering portion 312 can be deformed to further protrude in the direction from the outer circumferential surface toward the inner circumferential surface. This allows the force described above to be released. Consequently, a force to deform the gasket main body 310 such that a portion thereof is lifted up from the fitting groove 210 is suppressed, and it is possible to prevent the lifting up. Thus, it is possible to increase workability of the fitting of the gasket 300 into the fitting groove 210.

### (Second Embodiment)

Fig. 4 illustrates the second embodiment of the present invention. While the first embodiment described above has shown the configuration in which the protrusions are provided on the inner circumferential surface of the gasket main body, the present embodiment shows a configuration in which protrusions are provided on the outer circumferential surface of the gasket main body. Other basic configurations and operations are the same as those in the first embodiment, and therefore the same components are given the same reference signs, and a description thereof is omitted.

Fig. 4 is an illustrative view of a sealing structure according to the second embodiment of the present invention. Fig. 4A is a plan view of a gasket, and Fig. 4B is a bottom view illustrating a state where the gasket is fitted in a lid. A gasket 300A according to the present embodiment includes an annular gasket main body 310A to be fitted into the fitting groove 210 and a plurality of protrusions 320A provided on an outer circumferential surface of the gasket main body 310A, the protrusions 320A being provided spaced apart from each other in a circumferential direction. The gasket main body 310A includes a similarity shape portion 311A having a similarity shape to the fitting groove 210 in a plan view and a meandering portion 312A along the fitting groove 210. The meandering portion 312A has a meandering shape that protrudes in the same direction as the direction in which the protrusions 320A protrude (which is a direction from an inner circumferential surface toward the outer circumferential surface in the present embodiment).

In the present embodiment, in the same manner as in the first embodiment, annular seal protrusions are provided on the front and back surfaces of the gasket main body 310A. The annular seal protrusions are the same as those described in the first embodiment, and therefore a description thereof is omitted.

A description will be given of a relationship between the gasket 300A and the fitting groove 210 in a state where the gasket 300A is fitted in the fitting groove 210 before the case main body 100 and the lid 200 are fixed together. In this state, the plurality of protrusions 320A are configured to be in contact with one of the sidewalls of the fitting groove 210 (which is the outer circumferential sidewall in the present embodiment). This can prevent the gasket 300A from falling out of the fitting groove 210. In other words, the plurality of protrusions 320A have a function of protrusions for fall prevention. In the state described above, a portion of the gasket main body 310A other than the meandering portion 312A (i.e., the similarity shape portion 311A) is configured to be in contact with another sidewall of the fitting groove 210 opposite to the sidewall with which protrusions 320A are in contact (which is the inner circumferential sidewall in the present embodiment). This can more reliably prevent the gasket 300A from falling out of the fitting groove 210.

In the present embodiment, in the state described above, the meandering portion 312A is configured so as not to be in contact with either of both sidewalls of the fitting groove 210 (see Fig. 4B). Note that, in a state where the case main body 100 and the lid 200 are fixed together, the gasket 300A is deformed by being compressed by them. The meandering portion 312A may be configured such that, in this state, a part or the whole of both side surfaces thereof is in contact with both sidewalls of the fitting groove 210.

In the sealing structure thus configured according to the present embodiment, the same effects as those obtained in the first embodiment described above can be obtained.

### (Modifications)

Referring to Figs. 5 and 6, a description will be given of modifications of the gasket. The first embodiment described above shows the gasket 300 in which the meandering portion 312 is configured to have a meandering shape that protrudes in the same direction as the protruding direction of the protrusions 320 (direction from the outer circumferential surface toward the inner circumferential surface). However, the meandering portion may be configured to have a meandering that protrudes in a direction opposite to the protruding direction of the protrusions. Fig. 5A illustrates a gasket 300B having a meandering portion 312B having a meandering shape that protrudes in a direction opposite to the protruding direction of the protrusions 320 (direction from the inner circumferential surface toward the outer circumferential surface). Note that Fig. 5A is a plan view of the gasket 300B, and the same components as those in the first embodiment are given the same reference signs. The gasket 300B is fitted into the fitting groove 210 in the same manner as the first embodiment. In a state where the gasket 300B is fitted in the fitting groove 210 before the case main body and the lid are fixed together, not only the protrusions 320 but also portions opposite to (directly behind) the protrusions 320 may be in contact with the sidewalls of the fitting groove 210. This can more reliably prevent the gasket 300B from falling out of the fitting groove 210. Note that, in the state described above, the meandering portion 312B is configured so as not to be in contact with both sidewalls of the fitting groove 210, in the same manner as in the first embodiment. Fig. 5B illustrates the gasket 300B fitted in the fitting groove 210.

Likewise, the gasket 300A in the second embodiment may be configured such that a meandering portion has a meandering shape that protrudes in a direction opposite to the protruding direction of the protrusions. Specifically, as illustrated in Fig. 5C, a gasket 300C may be configured such that a meandering portion 312C has a meandering shape that protrudes in a direction opposite to the protruding direction of the protrusions 320 (direction from the outer circumferential surface toward the inner circumferential surface). The state in which the gasket 300C is fitted in the fitting groove before the case main body and the lid are fixed together is same as the embodiment and modifications each described above, and therefore a description thereof is omitted.

Note that the number and an arrangement of the protrusions are not particularly limited. In the first embodiment, the configuration is shown in which the protrusion 320 is provided at one location on each of the similarity shape portions 311 of the gasket 300 between the meandering portions 312 adjacent to each other in a longitudinal direction thereof. However, as illustrated in Fig. 6A, a gasket 300D may be configured such that the similarity shape portion 311 provided with the protrusion 320 and the similarity shape portion 311 that is not provided with the protrusion 320 are arranged at appropriate locations. Note that a gasket may be configured such that a plurality of protrusions 320 are provided at one similarity shape portion 311, though not shown.

In each of the embodiments described above, the meandering portion is curved only toward the inner circumferential surface side or toward the outer circumferential surface side in a plan view. However, as illustrated in Figs. 6B and 6C, meandering portions 312X and 312Y may be curved toward both the inner circumferential surface side and the outer circumferential surface side. The number of the portion curved toward the inner circumferential surface side and the number of the portion curved toward the outer circumferential surface side are not limited.

Note that, as in a gasket 300E illustrated in Fig. 6D, a protrusion 320E may be provided with a hollow 321. Fig. 6D is a diagram corresponding to a cross-sectional view along A1-A1 line in Fig. 2A, similarly to Fig. 2B. Due to the hollow 321 provided in the protrusion 320E, a repulsive force when the protrusion 320E is compressed is suppressed. This can more reliably prevent the lifting up of the gasket 300E when the gasket 300E is fitted into the fitting groove.

Note that, in each of the embodiments and modifications described above, the meandering portions are provided at a plurality of locations. However, a configuration can be adopted in which at least one meandering portion is provided depending on a size relationship between the gasket and the fitting groove or the like, as long as it is possible to prevent the lifting up of the gasket.

### [Reference Signs List]

10 Case
100 Case main body
105 End surface
110 Opening
200 Lid
210 Fitting groove
300, 300A, 300B, 300C, 300D, 300E Gasket
310, 310A Gasket main body
311, 311A Similarity shape portion
312, 312A, 312B, 312C, 312X, 312Y Meandering portion
313, 314, 315, 316 Seal protrusion
320, 320A, 320E Protrusion
321 Void

## Claims

1. A sealing structure comprising:
a first member;
a second member to be fixed to the first member; and
a gasket to be fitted into an annular fitting groove provided in at least one of the first member and the second member to seal a gap between respective end surfaces of the first member and the second member, the gasket including:
an annular gasket main body to be fitted into the fitting groove; and
a plurality of protrusions provided on an inner circumferential surface or an outer circumferential surface of the gasket main body, the protrusions being provided spaced apart from each other in a circumferential direction,
wherein, in a state where the gasket is fitted in the fitting groove before the first member and the second member are fixed together, the protrusions are in contact with one of sidewalls of the fitting groove, and the gasket main body has a meandering portion which is not in contact with either of the sidewalls of the fitting groove.

2. The sealing structure according to claim 1, wherein, in the state where the gasket is fitted in the fitting groove before the first member and the second member are fixed together, a portion of the gasket main body other than the meandering portion is in contact with the one of the sidewalls of the fitting groove opposite to the sidewall with which the protrusions are in contact.

3. The sealing structure according to claim 1 or 2, wherein each of the protrusions is provided with a hollow.
